# EUROPEAN PATENT APPLICATION

(11) **EP 4 446 291 A1**
(43) Date of publication of application: **16.10.2024**
(21) Application number: 22903979.7
(22) Date of filing: 15.11.2022
(51) Int. Cl.: C03C 13/02, C03B 37/08

(54) **GLASS FIBERS, METHOD FOR MANUFACTURING GLASS FIBERS, AND GLASS**

(30) Priority: 07.12.2021 JP 2021198485
(71) Applicant: Nippon Electric Glass Co., Ltd., Otsu-shi, Shiga 520-8639 (JP)
(72) Inventor: SEGAWA, Kyohei, Otsu-shi Shiga 520-8639 (JP); YOKOTA, Yuki, Otsu-shi Shiga 520-8639 (JP)
(74) Representative: Henkel & Partner mbB
(86) International application number: PCT/JP2022/042388
(87) International publication number: WO 2023/106048

(57) **Abstract**

To provide a glass fiber having a low spinning temperature and a low liquidus temperature, a large difference between the liquidus temperature and the spinning temperature, and excellent alkali resistance, and a manufacturing method therefor.

A glass fiber contains, as a glass composition, in mass% in terms of oxide, from 50% to 70% of SiO₂, from 10% to 20% of Na₂O, from 0% to 5.5% of TiO₂, and from 10% to 30% of ZrO₂.

## Description

### TECHNICAL FIELD

The present invention relates to a glass fiber having excellent corrosion resistance. The present invention particularly relates to a glass fiber having excellent productivity and suitable as a reinforcing material for a calcium silicate board or GRC (glass fiber reinforced-concrete), and as a material that requires corrosion resistance such as a battery separator and an asbestos substitute, and a manufacturing method therefor.

### BACKGROUND ART

In the related art, as a reinforcing material for GRC, a SiO₂-ZrO₂-R₂O (R is Li, Na, or K)-based ZrO₂-containing alkali-resistant glass fiber is used, and the glass fiber is also used as a reinforcing material for a calcium silicate board and as a corrosion-resistant material such as a battery separator and the like.

GRC is formed into a sheet shape by, for example, spraying a mixture of a glass fiber cut to a predetermined length, cement, an aggregate, an admixture, water, or the like into a mold using a spray gun, and is used as a structural material for construction. A glass fiber used in GRC is required to maintain sufficient strength for reliability even after a long period in concrete.

The above glass fiber is obtained by continuously forming and spinning a molten glass into a fiber shape using, for example, a noble metal bushing device. Note that, the bushing has, as the structure, a container shape for retaining a molten glass, and a number of nozzles are vertically disposed at a bottom portion thereof. Then, the glass fiber is formed by drawing a molten glass adjusted to a temperature around the spinning temperature (the temperature at which the viscosity of the glass is about 10³ dPa s, also called a spinning temperature) into a fiber shape out of the nozzles at the bottom portion of the bushing.

As the glass fiber, it is effective to contain a large amount of ZrO₂ in the glass composition as described in Patent Literature 1, from the viewpoint of improving the alkali resistance. However, in this case, the spinning temperature of the glass increases. When the spinning temperature of the glass increases, the damage to the noble metal bushing device increases, the frequency of replacement increases, and the production cost increases. In addition, the liquidus temperature increases, and the difference between the spinning temperature and the liquidus temperature becomes small. When the difference between the spinning temperature and the liquidus temperature becomes small, there is a problem that the glass tends to devitrify in the nozzles at the bottom portion of the bushing, making continuous production difficult.

Therefore, in recent years, various glass compositions have been proposed for the purpose of improving the productivity of this type of glass fiber.

For example, Patent Literature 2 discloses a glass fiber in which the spinning temperature is lowered while ensuring the difference between the liquidus temperature and the spinning temperature by reducing the amount of ZrO₂ and containing certain amounts of TiO₂ and K₂O. However, there is a problem that the alkali resistance of this glass fiber is insufficient.

### CITATION LIST

### PATENT LITERATURE

Patent Literature 1: JPS49-40126B
Patent Literature 2: WO2014/065321

### SUMMARY OF INVENTION

### TECHNICAL PROBLEM

An object of the present invention is to provide a glass fiber having a low spinning temperature and a low liquidus temperature, a large difference between the liquidus temperature and the spinning temperature, and excellent alkali resistance, and a manufacturing method therefor.

### SOLUTION TO PROBLEM

A glass fiber according to the present invention contains, as a glass composition, in mass% in terms of oxide, from 50% to 70% of SiO₂, from 10% to 20% of Na₂O, from 0% to 5.5% of TiO₂, and from 10% to 30% of ZrO₂. Accordingly, a glass fiber having high alkali resistance and good productivity can be obtained.

It is preferable that, the glass fiber according to the present invention further contains, as a glass composition, in mass% in terms of oxide, from 0.001% to 0.1% of Y₂O₃.

It is preferable that, the glass fiber according to the present invention further contains, as a glass composition, in mass% in terms of oxide, from 0.001% to 1% of HfO₂.

It is preferable that, the glass fiber according to the present invention contains, as a glass composition, in mass% in terms of oxide, from 57.1% to 64.8% of SiO₂, from 0% to 0.3% of Al₂O₃, from 1.71% to 10% of CaO, from 12% to 20% of Na₂O, from 0% to 6% of K₂O, from 0% to 5% of TiO₂, and from 15.1% to 18.5% of ZrO₂.

It is preferable that, in the glass fiber according to the present invention, as a glass composition, Y₂O₃/ZrO₂ is 0.0005 or more in mass ratio in terms of oxide. Here, "Y₂O₃/ZrO" is a value obtained by dividing the content of Y₂O₃ by the content of ZrO.

It is preferable that, in the glass fiber according to the present invention, as a glass composition, Na₂O/ZrO₂ is from 0.4 to 1.3 in mass ratio in terms of oxide. Here, "Na₂O/ZrO₂" is a value obtained by dividing the content of Na₂O by the content of ZrO₂.

It is preferable that, in the glass fiber according to the present invention, as a glass composition, K₂O/CaO is 15 or less in mass ratio in terms of oxide. Here, "K₂O/CaO" is a value obtained by dividing the content of K₂O by the content of CaO.

It is preferable that, in the glass fiber according to the present invention, as a glass composition, K₂O/ZrO₂ is 0.5 or less in mass ratio in terms of oxide. Here, "K₂O/ZrO₂" is a value obtained by dividing the content of K₂O by the content of ZrO₂.

It is preferable that, in the glass fiber according to the present invention, as a glass composition, (Na₂O+K₂O)/(CaO+MgO) is 1.5 or more in mass ratio in terms of oxide. Here, "(Na₂O+K₂O)/(CaO+MgO)" is a value obtained by dividing the total content of Na₂O and K₂O by the total content of CaO and MgO.

It is preferable that, in the glass fiber according to the present invention, as a glass composition, (Na₂O+K₂O+CaO)/Al₂O₃ is 80 or more in mass ratio in terms of oxide. Here, "(Na₂O+K₂O+CaO)/Al₂O₃" is a value obtained by dividing the total content of Na₂O, K₂O and CaO by the content of Al₂O₃.

It is preferable that the glass fiber according to the present invention has a spinning temperature Tx of 1350°C or lower. Accordingly, since fiberizing can be performed at a low temperature, the life of a fiberizing equipment such as a bushing can be extended, and the production cost can be reduced. Note that, the spinning temperature Tx is a temperature at which the viscosity in high temperature of a molten glass corresponds to 10³ dPa·s.

It is preferable that, in the glass fiber according to the present invention, a temperature difference ΔTxy between a spinning temperature Tx and a liquidus temperature Ty is 15°C or more. Accordingly, it is possible to improve the productivity. Here, the liquidus temperature Ty is a value obtained by measuring a temperature at which crystals (initial phase) precipitate after a glass powder that has passed through a standard 30-mesh sieve (sieve opening: 500 µm) and remained on a 50-mesh sieve (sieve opening: 300 µm) is charged into a platinum boat and kept in a temperature gradient furnace for 16 hours.

It is preferable that the glass fiber according to the present invention has a liquidus temperature Ty of 1250°C or lower. Accordingly, precipitation of crystals (initial phase) can be prevented during glass fiber forming.

It is preferable that, in the glass fiber according to the present invention, when a glass corresponding to a specific gravity crushed and classified to a particle size of from 300 µm to 500 µm is immersed in 100 ml of a 10 mass% NaOH aqueous solution at 80°C for 168 hours, a mass loss rate of the glass is less than 4.5%. Accordingly, a glass fiber having high alkali resistance can be obtained.

A glass fiber manufacturing method according to the present invention includes melting a mixed raw material batch in a glass melting furnace, continuously drawing the obtained molten glass out of a bushing, and forming the drawn-out glass into a fiber shape, to obtain the above glass fiber.

A glass according to the present invention contains, as a glass composition, in mass% in terms of oxide, from 50% to 70% of SiO₂, from 10% to 20% of Na₂O, from 0% to 5.5% of TiO₂, and from 10% to 30% of ZrO₂.

### ADVANTAGEOUS EFFECTS OF INVENTION

According to the present invention, it is possible to provide a glass fiber having a low spinning temperature and a low liquidus temperature, a large difference between the liquidus temperature and the spinning temperature, and excellent alkali resistance, and a manufacturing method therefor.

### DESCRIPTION OF EMBODIMENTS

A glass fiber according to the present invention contains, as a glass composition, in mass% in terms of oxide, from 50% to 70% of SiO₂, from 10% to 20% of Na₂O, from 0% to 5.5% of TiO₂, and from 10% to 30% of ZrO₂. The reasons why the glass composition is limited as described above are shown below. Note that, in the description regarding the content of each component below, "%" means "mass%" unless otherwise specified.

SiO₂ is a main component that forms a network frame of a glass. It is also a component that improves the mechanical strength of the glass and the acid resistance of the glass. When the content of SiO₂ is too small, the mechanical strength decreases and the elastic modulus decreases, making it difficult to obtain sufficient strength. In addition, the acid resistance of the glass decreases. Therefore, the lower limit of the content of SiO₂ is preferably 50% or more, 51% or more, 52% or more, 53% or more, 54% or more, 55% or more, 56% or more, 57% or more, more than 57%, 57.1% or more, 57.5% or more, 57.8% or more, 58% or more, 58.5% or more, 58.6% or more, 58.7% or more, 58.8% or more, 58.9% or more, 59% or more, 59.1% or more, 59.2% or more, 59.3% or more, 59.4% or more, and particularly preferably 59.5% or more. On the other hand, when the content of SiO₂ is too large, the viscosity of the molten glass becomes too high, making it difficult to maintain a homogeneous molten state, and as a result, it may become difficult to adjust the diameter of the glass fiber. In addition, when the viscosity is high, the energy required to melt the glass increases, a spinning temperature Tx also increases, the damage to a noble metal bushing increases, the frequency of replacement increases, and the production cost increases. Therefore, the upper limit of the content of SiO₂ is preferably 70% or less, 69% or less, 68% or less, 67% or less, 66% or less, 65.5% or less, 65.3% or less, 65% or less, 64.9% or less, 64.8% or less, 64.7% or less, 64.6% or less, 64.5% or less, 64% or less, 63.5% or less, 63.4% or less, 63.3% or less, 63.2% or less, 63.1% or less, 63% or less, less than 63%, 62.9% or less, 62.8% or less, and particularly preferably 62.7% or less.

Na₂O is a component that improves the meltability and the formability of the glass by decreasing the viscosity of the glass. When the content of Na₂O is too small, the viscosity of the glass increases and the energy required to melt the glass increases. In addition, the damage to a noble metal bushing increases, the frequency of replacement increases, and the production cost increases. Therefore, the lower limit of the content of Na₂O is preferably 10% or more, 11% or more, 12% or more, 12.1% or more, 12.2% or more, 12.3% or more, 12.4% or more, 12.5% or more, 12.6% or more, 12.7% or more, 12.8% or more, 12.9% or more, 13% or more, more than 13%, 13.1% or more, 13.2% or more, 13.3% or more, 13.4% or more, 13.5% or more, and particularly preferably 13.6% or more. On the other hand, when the content of Na₂O is too large, the initial phase in which CaO, Na₂O, K₂O, and the like are dissolved in zircon (ZrSiO₄) tends to precipitate, the liquidus temperature of the glass increases, the difference between the spinning temperature and the liquidus temperature becomes small, and the productivity decreases. In addition, the water resistance of the glass decreases. Therefore, the upper limit of the content of Na₂O is preferably 20% or less, 19% or less, 18.5% or less, 18% or less, 17.5% or less, 17% or less, 16.9% or less, 16.8% or less, 16.7% or less, 16.5% or less, 16.4% or less, 16.3% or less, 16.2% or less, 16.1% or less, 16% or less, 15.9% or less, 15.8% or less, 15.7% or less, 15.6% or less, 15.5% or less, 15.4% or less, 15.3% or less, 15.2% or less, 15.1% or less, 15% or less, 14.9% or less, 14.8% or less, 14.7% or less, 14.6% or less, 14.5% or less, 14.4% or less, 14.3% or less, and particularly preferably 14.2% or less.

TiO₂ can improve the water resistance of the glass and can lower the melting temperature of the glass, and the viscosity and the spinning temperature Tx of the glass, thereby maintaining good productivity. On the other hand, when the content of TiO₂ is too large, the alkali resistance of the glass tends to decrease, and TiO₂-based devitrified crystals tend to be generated in the molten glass, which may cause clogging of nozzles of the bushing during glass fiber forming. Therefore, the content of TiO₂ is preferably from 0% to 5.5%, from 0% to 5.4%, from 0% to 5.3%, from 0% to 5.2%, from 0% to 5.1%, from 0% to 5%, from 0% to less than 5%, from 0% to 4%, from 0% to 3%, from 0% to 2%, from 0% to 1%, and particularly preferably from 0.01% to less than 1%.

ZrO₂ is a component that improves the alkali resistance, the acid resistance, and the water resistance of the glass. When the content of ZrO₂ is too small, the alkali resistance decreases, and it is impossible to achieve the durability required for GRC. Therefore, the lower limit of the content of ZrO₂ is preferably 10% or more, 11% or more, 12% or more, 13% or more, 14% or more, 14.5% or more, 14.8% or more, 15% or more, 15.1% or more, 15.2% or more, 15.3% or more, 15.4% or more, 15.5% or more, 15.6% or more, 15.7% or more, 15.8% or more, 15.9% or more, 16% or more, 16.1% or more, 16.2% or more, 16.3% or more, 16.4% or more, and particularly preferably 16.5% or more. On the other hand, when the content of ZrO₂ is too large, a liquidus temperature Ty of the glass increases, a temperature difference ΔTxy between the spinning temperature Tx and the liquidus temperature Ty becomes small, and the productivity decreases. Therefore, the upper limit of the content of ZrO₂ is preferably 30% or less, 29% or less, 28% or less, 27% or less, 26% or less, 25% or less, 24% or less, 23% or less, 22% or less, 21% or less, 20% or less, 19% or less, 18.9% or less, 18.8% or less, 18.7% or less, 18.6% or less, 18.5% or less, 18.4% or less, 18.3% or less, 18.2% or less, 18.1% or less, 18% or less, less than 18%, and particularly preferably 17.9% or less.

In addition, the glass fiber according to the present invention may contain components other than the above components (SiO₂, Na₂O, TiO₂, and ZrO₂).

Y₂O₃ is a component that improves the alkali resistance, the acid resistance, the water resistance, and the mechanical strength of the glass. When the content of Y₂O₃ is too small, the alkali resistance decreases and it is difficult to obtain sufficient alkali resistance. Therefore, the lower limit of the content of Y₂O₃ is preferably 0.001% or more, 0.002% or more, 0.003% or more, 0.004% or more, 0.005% or more, 0.006% or more, 0.007% or more, 0.008% or more, 0.009% or more, 0.01% or more, 0.015% or more, 0.02% or more, 0.025% or more, 0.026% or more, 0.027% or more, 0.028% or more, 0.029% or more, and particularly preferably 0.03% or more. On the other hand, when the content of Y₂O₃ is too large, it forms yttria-stabilized zirconia with ZrO₂, the liquidus temperature Ty increases, the temperature difference ΔTxy between the spinning temperature Tx and the liquidus temperature Ty becomes small, and the productivity decreases. In addition, since the raw material cost is high, the production cost increases. Therefore, the upper limit of the content of Y₂O₃ is preferably 0.1% or less, less than 0.1%, 0.09% or less, 0.08% or less, 0.07% or less, 0.06% or less, 0.05% or less, and particularly preferably less than 0.05%.

HfO₂ is a component that improves the alkali resistance, the acid resistance, the water resistance, and the mechanical strength of the glass. When the content of HfO₂ is too small, the alkali resistance decreases and it is difficult to obtain sufficient alkali resistance. Therefore, the lower limit of the content of HfO₂ is preferably 0.001% or more, 0.002% or more, 0.003% or more, 0.004% or more, 0.005% or more, 0.006% or more, 0.007% or more, 0.008% or more, 0.009% or more, 0.01% or more, 0.015% or more, 0.02% or more, 0.025% or more, 0.026% or more, 0.027% or more, 0.028% or more, 0.029% or more, and particularly preferably 0.03% or more. On the other hand, when the content of HfO₂ is too large, crystals containing Hf precipitate, the glass tends to devitrify, and the productivity decreases. In addition, since the raw material cost is high, the production cost increases. Therefore, the upper limit of the content of HfO₂ is preferably 1% or less, less than 1%, 0.9% or less, 0.8% or less, 0.7% or less, 0.6% or less, 0.5% or less, and particularly preferably less than 0.5%.

Al₂O₃ is a component that improves the chemical durability and the mechanical strength of the glass. On the other hand, Al₂O₃ is also a component that increases the viscosity of the glass. When the content of Al₂O₃ is too large, devitrified crystals of mullite (3Al₂O₃-2SiO₂) whose main component is Al₂O₃ tend to be generated in the molten glass, the viscosity of the molten glass becomes too high, making it difficult to maintain a homogeneous molten state, and as a result, the dimensional accuracy of the diameter of the glass fiber tends to decrease. In addition, the energy required to melt the glass increases, the spinning temperature Tx also increases, the damage to a noble metal bushing increases, the frequency of replacement increases, and the production cost increases. Therefore, the content of Al₂O₃ is preferably from 0% to 3%, from 0% to 2%, from 0% to 1.5%, from 0% to 1%, from 0% to 0.8%, from 0% to 0.7%, from 0% to 0.6%, from 0% to 0.5%, from 0% to 0.4%, from 0% to 0.3%, from 0% to 0.2%, and particularly preferably from 0.01% to 0.2%.

CaO is a component that lowers the spinning temperature Tx during glass fiber forming and that improves the alkali resistance. When the content of CaO is too small, it is difficult to obtain the above effects. Therefore, the lower limit of the content of CaO is preferably 0% or more, 0.1% or more, 0.2% or more, 0.3% or more, 0.4% or more, 0.5% or more, 0.6% or more, 0.7% or more, 0.8% or more, 0.9% or more, 1% or more, 1.1% or more, 1.2% or more, 1.3% or more, 1.4% or more, 1.5% or more, 1.6% or more, 1.7% or more, more than 1.7%, 1.71% or more, 1.75% or more, 1.8% or more, 1.9% or more, 2% or more, 2.1% or more, 2.2% or more, 2.3% or more, 2.4% or more, 2.5% or more, 2.6% or more, 2.7% or more, 2.8% or more, 2.9% or more, 3% or more, 3.2% or more, 3.4% or more, 3.5% or more, 3.6% or more, 3.8% or more, 4% or more, 4.2% or more, 4.4% or more, 4.5% or more, 4.6% or more, 4.8% or more, 4.9% or more, 5% or more, 5.1% or more, 5.2% or more, 5.3% or more, 5.4% or more, 5.5% or more, 5.6% or more, and particularly preferably more than 5.6%. On the other hand, since Ca ions have large electric field strength, when the content of CaO is too large, zircon in which Ca is dissolved tends to precipitate as the initial phase, so that the liquidus temperature Ty of the glass increases, the temperature difference ΔTxy between the spinning temperature Tx and the liquidus temperature Ty becomes small, and the productivity decreases. Therefore, the upper limit of the content of CaO is preferably 10% or less, 9% or less, 8% or less, 7.5% or less, 7.4% or less, 7.3% or less, 7.2% or less, 7.1% or less, 7% or less, 6.9% or less, 6.8% or less, 6.7% or less, 6.6% or less, 6.5% or less, and particularly preferably less than 6.5%.

K₂O is a component that improves the meltability and the formability of the glass by decreasing the viscosity of the glass. On the other hand, when the content of K₂O is too large, the water resistance of the glass decreases. In addition, the raw material batch easily absorbs moisture, and an aggregate of raw material powders tends to be formed. When an aggregate of raw material powders is formed, the solubility of the raw material batch deteriorates, and undissolved zirconia tends to remain in the product glass. Therefore, the content of K₂O is preferably from 0% to 10%, from 0% to 9%, from 0% to 8%, from 0% to 7%, from 0% to 6%, from 0% to 5%, from 0% to 4.5%, from 0% to 4%, from 0% to 3.5%, from 0% to 3%, from 0% to 2.5%, from 0% to 2%, from 0% to 1.5%, from 0% to 1.4%, from 0% to 1.3%, from 0% to 1.2%, from 0% to 1.1%, from 0% to 1%, from 0% to 0.9%, from 0% to 0.8%, from 0% to 0.7%, from 0% to 0.6%, from 0% to 0.5%, from 0% to 0.4%, from 0% to 0.3%, from 0% to less than 0.3%, from 0.001% to less than 0.3%, from 0.001% to 0.25%, and particularly preferably from 0.001% to 0.2%.

MgO is a component that decreases the viscosity of the glass and that improves the elastic modulus of the glass. On the other hand, when the content of MgO is too large, crystals tend to be generated, which may cause clogging of the nozzles of the bushing during glass fiber forming. Therefore, the content of MgO is preferably from 0% to 1.5%, from 0% to 1.4%, from 0% to 1.3%, from 0% to 1.2%, from 0% to 1.1%, and particularly preferably from 0% to 1%.

P₂O₅ is a component that lowers the liquidus temperature Ty. When the content of P₂O₅ is too small, it is difficult to obtain the above effect. Therefore, the lower limit of the content of P₂O₅ is preferably 0.01% or more, 0.015% or more, and particularly preferably 0.02% or more. On the other hand, when the content of P₂O₅ is too large, the alkali resistance tends to decrease. Therefore, the upper limit of the content of P₂O₅ is preferably 0.2% or less, 0.1% or less, 0.07% or less, and particularly preferably 0.05% or less.

Li₂O is a component that decreases the viscosity of the glass and that improves the meltability and the formability. However, since Li₂O has a high raw material cost, the production cost increases. Therefore, the content of Li₂O is preferably from 0% to 1%, from 0% to 0.9%, from 0% to 0.8%, from 0% to 0.7%, from 0% to 0.6%, from 0% to 0.5%, from 0% to 0.4%, from 0% to 0.3%, from 0% to 0.2%, from 0% to 0.15%, and particularly preferably from 0% to less than 0.15%.

Fe₂O₃ is a component that lowers the liquidus temperature Ty. When the content of Fe₂O₃ is too small, it is difficult to obtain the above effect. Therefore, the lower limit of the content of Fe₂O₃ is preferably 0.0001% or more, 0.0002% or more, 0.0003% or more, 0.0004% or more, 0.0005% or more, 0.0006% or more, and particularly preferably 0.001% or more. On the other hand, when the content of Fe₂O₃ is too large, undissolved Fe₂O₃ tends to remain in the product glass, and un-preferred crystals tend to be generated, which may cause clogging of the nozzles of the bushing during glass fiber forming. Therefore, the upper limit of the content of Fe₂O₃ is preferably 5% or less, 4% or less, 3% or less, 2% or less, 1% or less, 0.9% or less, 0.8% or less, 0.7% or less, 0.6% or less, 0.5% or less, 0.4% or less, 0.3% or less, 0.2% or less, and particularly preferably 0.1% or less.

SO₃ is a component that improves the fining property during glass melting. When the content of SO₃ is too small, it is difficult to obtain the above effect. Therefore, the lower limit of the content of SO₃ is preferably 0.0001% or more, 0.0002% or more, 0.0003% or more, 0.0004% or more, 0.0005% or more, 0.0006% or more, and particularly preferably 0.001% or more. On the other hand, when the content of SO₃ is too large, a large amount of bubbles are generated in the glass melt, and bubbles are generated during glass fiber forming, leading to cutting of the glass fiber, resulting in a decrease in productivity. Therefore, the upper limit of the content of SO₃ is preferably 1% or less, 0.9% or less, 0.8% or less, 0.7% or less, 0.6% or less, 0.5% or less, 0.4% or less, 0.3% or less, 0.2% or less, and particularly preferably 0.1% or less.

The glass fiber according to the present invention can maintain high alkali resistance and productivity in a more preferred manner by controlling Y₂O₃/ZrO₂. When Y₂O₃/ZrO₂ is too small, the alkali resistance decreases, the liquidus temperature Ty of the glass increases, the temperature difference ΔTxy between the spinning temperature and the liquidus temperature becomes small, and the productivity decreases. Therefore, the lower limit of Y₂O₃/ZrO₂ is preferably 0.0005 or more, 0.001 or more, 0.0011 or more, 0.0012 or more, 0.0013 or more, 0.0014 or more, 0.0015 or more, more than 0.0015, 0.0016 or more, 0.0017 or more, 0.0018 or more, and particularly preferably more than 0.0018. On the other hand, when Y₂O₃/ZrO₂ is too large, Y₂O₃ forms yttria-stabilized zirconia with ZrO₂, the liquidus temperature Ty increases, the temperature difference ΔTxy between the spinning temperature Tx and the liquidus temperature Ty becomes small, and the productivity decreases. Therefore, the upper limit of Y₂O₃/ZrO₂ is preferably 1 or less, 0.5 or less, 0.4 or less, 0.3 or less, 0.2 or less, 0.1 or less, and particularly preferably less than 0.1.

The glass fiber according to the present invention can maintain high alkali resistance and productivity in a more preferred manner by controlling Na₂O/ZrO₂. When Na₂O/ZrO₂ is too large or too small, the alkali resistance of the glass decreases, the liquidus temperature Ty increases, the temperature difference ΔTxy between the spinning temperature and the liquidus temperature becomes small, and the productivity decreases. Therefore, the lower limit of Na₂O/ZrO₂ is preferably 0.4 or more, 0.5 or more, 0.6 or more, 0.7 or more, and particularly preferably 0.8 or more. The upper limit of Na₂O/ZrO₂ is preferably 1.3 or less, 1.25 or less, 1.2 or less, 1.15 or less, 1.14 or less, 1.13 or less, 1.12 or less, 1.11 or less, and particularly preferably 1.1 or less.

The glass fiber according to the present invention can maintain high alkali resistance and productivity in a more preferred manner by controlling K₂O/CaO. When K₂O/CaO is too large, the liquidus temperature Ty increases, the temperature difference ΔTxy between the spinning temperature Tx and the liquidus temperature Ty becomes small, and the productivity decreases. Therefore, K₂O/CaO is preferably 15 or less, 14 or less, 13.6 or less, and particularly preferably 13.5 or less. Note that, the lower limit of K₂O/CaO is not particularly limited, and is realistically 0.0001 or more.

The glass fiber according to the present invention can maintain high alkali resistance and productivity in a more preferred manner by controlling K₂O/ZrO₂. When K₂O/ZrO₂ is too large, the liquidus temperature Ty increases, the temperature difference ΔTxy between the spinning temperature Tx and the liquidus temperature Ty becomes small, and the productivity decreases. Therefore, K₂O/ZrO₂ is preferably 0.5 or less, 0.4 or less, 0.35 or less, less than 0.35, 0.34 or less, 0.33 or less, 0.32 or less, 0.31 or less, 0.3 or less, 0.29 or less, 0.28 or less, 0.27 or less, 0.26 or less, 0.25 or less, 0.24 or less, 0.23 or less, 0.22 or less, 0.21 or less, and particularly preferably 0.2 or less. Note that, the lower limit of K₂O/ZrO₂ is not particularly limited, and is realistically 0.0001 or more.

The glass fiber according to the present invention can have a reduced raw material cost and maintain high productivity in a more preferred manner by controlling (Na₂O+K₂O)/(CaO+MgO). When (Na₂O+K₂O)/(CaO+MgO) is too small, the liquidus temperature Ty of the glass increases, the temperature difference ΔTxy between the spinning temperature Tx and the liquidus temperature Ty becomes small, and the productivity decreases. Therefore, (Na₂O+K₂O)/(CaO+MgO) is preferably 1.5 or more, 1.6 or more, 1.7 or more, 1.75 or more, 1.8 or more, 1.9 or more, 2 or more, more than 2, 2.1 or more, 2.11 or more, 2.12 or more, 2.13 or more, 2.14 or more, 2.15 or more, 2.16 or more, 2.17 or more, 2.18 or more, 2.19 or more, 2.2 or more, 2.25 or more, 2.3 or more, and particularly preferably more than 2.3. Note that, the upper limit of (Na₂O+K₂O)/(CaO+MgO) is not particularly limited, and is realistically 1000 or less.

The glass fiber according to the present invention can maintain the alkali resistance and high productivity in a more preferred manner by controlling (Na₂O+K₂O+CaO)/Al₂O₃. When (Na₂O+K₂O+CaO)/Al₂O₃ is too small, the alkali resistance decreases, the spinning temperature Tx of the glass increases, and the productivity decreases. Therefore, (Na₂O+K₂O+CaO)/Al₂O₃ is preferably 80 or more, 90 or more, 100 or more, 105 or more, 110 or more, 120 or more, 125 or more, 126 or more, 127 or more, 128 or more, 129 or more, 130 or more, 131 or more, 132 or more, 133 or more, 134 or more, 135 or more, 136 or more, 137 or more, 138 or more, 139 or more, more than 139, and particularly preferably 140 or more. Note that, the upper limit of (Na₂O+K₂O+CaO)/Al₂O₃ is not particularly limited, and is realistically 5000 or less.

In addition, the glass fiber according to the present invention may contain trace components other than the above components (SiO₂, Al₂O₃, CaO, Na₂O, TiO₂, ZrO₂, HfO₂, Y₂O₃, K₂O, MgO, P₂O₅, Li₂O, Fe₂O₃, and SO₃). However, it is preferable to adjust the composition such that the total content of the above components is 97% or more, 98% or more, 98.5% or more, and particularly preferably 99% or more. When the total content of these components is less than 97%, problems tend to occur that the alkali resistance, the acid resistance, and the water resistance may be decreased due to mixing of different components and the characteristics of the product deteriorate, or the temperature difference ΔTxy between the spinning temperature Tx and the liquidus temperature Ty becomes small and the productivity decreases.

As components other than the above components, trace components such as H₂, CO₂, CO, H₂O, He, Ne, Ar, or N₂ may be contained up to 0.1% each. In addition, up to 500 ppm of noble metal elements such as Pt, Rh, and Au may be added to the glass.

MoO₃ is a component that can be mixed in from raw materials, members for melting, and the like, and when it is contained in too much, crystals containing Mo precipitate, the glass tends to devitrify, and the productivity decreases. The content of MoO₃ is preferably 1000 ppm or less, 900 ppm or less, 800 ppm or less, 700 ppm or less, 600 ppm or less, 500 ppm or less, 400 ppm or less, 300 ppm or less, 200 ppm or less, and particularly preferably 100 ppm or less. On the other hand, since removal of MoO₃ contained in raw materials as impurities increases the raw material cost, the lower limit of the content of MoO₃ is preferably 0.1 ppm or more, 0.5 ppm or more, 1 ppm or more, 2 ppm or more, 3 ppm or more, 4 ppm or more, and particularly preferably 5 ppm or more.

Further, in order to improve the alkali resistance and the liquidus temperature Ty, B₂O₃, SrO, BaO, ZnO, Cr₂O₃, Sb₂O₃, MnO, SnO₂, CeO₂, Cl₂, La₂O₃, WO₃, and Nb₂O₅ may be contained in a total amount of 2% or less, 1.5% or less, 1.2% or less, 1.1% or less, and particularly preferably 1% or less. Note that, from the viewpoint of environmental load, it is preferable not to contain large amounts of Cr₂O₃ and B₂O₃ in terms of composition design. The content of Cr₂O₃ is preferably less than 1%, less than 0.5%, less than 0.3%, and particularly preferably less than 0.1%, and the content of B₂O₃ is preferably less than 1%, less than 0.5%, less than 0.3%, and particularly preferably less than 0.2%.

Next, the characteristics of the glass fiber according to the present invention will be described.

In the glass fiber according to the present invention, the spinning temperature Tx is preferably 1350°C or lower, 1340°C or lower, 1330°C or lower, 1320°C or lower, 1310°C or lower, 1300°C or lower, 1290°C or lower, and particularly preferably 1280°C or lower. When the spinning temperature Tx is too high, since it is necessary to perform spinning at a high temperature, the damage to the noble metal bushing increases, the frequency of replacement increases, and the production cost increases. Note that, the lower limit of the spinning temperature Tx is not particularly limited, and is realistically 1100°C or higher.

In the glass fiber according to the present invention, the temperature difference ΔTxy between the spinning temperature Tx and the liquidus temperature Ty is preferably 15°C or more, 20°C or more, 30°C or more, 40°C or more, 50°C or more, 60°C or more, 70°C or more, 80°C or more, 90°C or more, 100°C or more, and particularly preferably 110°C or more. When the temperature difference ΔTxy between the spinning temperature Tx and the liquidus temperature Ty is too small, the productivity decreases. Note that, the upper limit of ΔTxy is not particularly limited, and is realistically 250°C or less.

In the glass fiber according to the present invention, the liquidus temperature Ty is preferably 1250°C or lower, 1240°C or lower, 1230°C or lower, 1220°C or lower, 1210°C or lower, 1200°C or lower, 1190°C or lower, 1185°C or lower, and particularly preferably 1180°C or lower. When the liquidus temperature is too high, the productivity decreases. Note that, the lower limit of the liquidus temperature Ty is not particularly limited, and is realistically 900°C or higher.

In the glass fiber according to the present invention, when a glass corresponding to a specific gravity crushed and classified to a particle size of from 300 µm to 500 µm is immersed in 100 ml of a 10 mass% NaOH aqueous solution at 80°C for 168 hours, the mass loss rate of the glass is preferably less than 4.5%, 4.3% or less, 4.2% or less, 4% or less, 3.9% or less, 3.8% or less, 3.7% or less, 3.6% or less, 3.5% or less, and particularly preferably 3.4 % or less. When the mass loss rate of the glass due to an alkali resistance test is high, the alkali resistance of the glass decreases, and the reliability as a reinforcing material for composite materials such as a calcium silicate board and GRC decreases.

Next, a glass fiber manufacturing method according to the present invention will be described using a direct melt method (DM method) as an example. However, the present invention is not limited to the method described below, and for example, it is also possible to employ a so-called indirect forming method (MM method: marble melt method) in which a fiber glass material formed into a marble shape is remelted using a bushing device and subjected to spinning. Note that this method is suitable for low-volume and high-mix production.

First, a glass raw material batch mixed to have the above composition (and characteristics) is charged into a glass melting furnace, vitrified, melted, and homogenized. Note that the melting temperature is preferably about 1400°C to 1600°C.

Subsequently, the molten glass is formed into a glass fiber.

In some embodiments, the molten glass is supplied to a bushing, and the molten glass supplied to the bushing is continuously drawn in filaments out of a number of bushing nozzles provided at the bottom surface of the bushing. Various treatment agents are applied to the monofilaments drawn out in this manner, and a glass strand is obtained by bundling the monofilaments in predetermined numbers. Note that, the glass fiber according to the present invention includes not only the above glass strand, but also a short fiber such as glass wool formed by a centrifugation method, or the like, and monofilaments before bundled into the glass stand.

The glass fiber according to the present invention thus formed is processed into a chopped strand, a yarn, a roving, and the like, and is used for various applications. Note that, the chopped strand is obtained by cutting a glass fiber (strand) in which glass monofilaments are bundled to a predetermined length. The yarn is a twist of a strand. The roving is a combination of a plurality of strands and winding the same into a cylindrical shape.

### EXAMPLE 1

Hereinafter, the present invention will be described in detail based on Examples.

Tables 1 to 7 show Examples of glasses constituting the glass fiber according to the present invention (Sample Nos. 1 to 38 and Nos. 40 to 68) and Comparative Example (Sample No. 39), respectively.

**[Table 1]**

| mass% | No. 1 | No. 2 | No. 3 | No. 4 | No. 5 | No. 6 | No. 7 | No. 8 | No. 9 | No. 10 |
|---|---|---|---|---|---|---|---|---|---|---|
| SiO₂ | 64.8 | 64.5 | 63.3 | 62.4 | 61.5 | 60.9 | 60.0 | 58.8 | 60.4 | 60.3 |
| Na₂O | 15.4 | 15.3 | 15.4 | 15.4 | 15.2 | 15.4 | 15.3 | 15.3 | 15.4 | 15.3 |
| TiO₂ | 0.0 | 1.8 | 1.7 | 0.0 | 5.0 | 1.7 | 0.0 | 0.0 | 0.0 | 0.0 |
| ZrO₂ | 17.6 | 17.4 | 17.5 | 17.6 | 17.3 | 17.5 | 17.6 | 17.3 | 17.6 | 17.5 |
| Y₂O₃ | 0.037 | 0.036 | 0.036 | 0.037 | 0.036 | 0.036 | 0.036 | 0.036 | 0.036 | 0.036 |
| HfO₂ | 0.34 | 0.34 | 0.34 | 0.34 | 0.33 | 0.34 | 0.34 | 0.34 | 0.34 | 0.34 |
| Al₂O₃ | 0.15 | 0.15 | 0.16 | 0.15 | 0.15 | 0.15 | 0.15 | 0.15 | 0.15 | 0.15 |
| CaO | 1.2 | 0.0 | 1.2 | 3.5 | 0.0 | 3.5 | 3.4 | 3.4 | 4.3 | 4.0 |
| K₂O | 0.330 | 0.270 | 0.260 | 0.260 | 0.260 | 0.260 | 2.850 | 4.292 | 1.529 | 2.001 |
| MgO | 0.013 | 0.007 | 0.014 | 0.032 | 0.005 | 0.032 | 0.032 | 0.033 | 0.039 | 0.038 |
| P₂O₅ | 0.03 | 0.03 | 0.03 | 0.03 | 0.03 | 0.03 | 0.03 | 0.03 | 0.03 | 0.03 |
| Li₂O | 0.09 | 0.09 | 0.09 | 0.09 | 0.09 | 0.09 | 0.10 | 0.10 | 0.10 | 0.09 |
| Fe₂O₃ | 0.030 | 0.030 | 0.030 | 0.031 | 0.030 | 0.031 | 0.031 | 0.031 | 0.031 | 0.031 |
| SO₃ | 0.071 | 0.062 | 0.068 | 0.076 | 0.066 | 0.075 | 0.077 | 0.078 | 0.078 | 0.078 |
| MoO₃ (ppm) | 7.9 | 8.3 | 8.6 | 6.9 | 7.5 | 7.2 | 7.1 | 7.1 | 7.1 | 7.5 |
| Y₂O₃/ZrO₂ | 0.0021 | 0.0021 | 0.0021 | 0.0021 | 0.0021 | 0.0021 | 0.0020 | 0.0021 | 0.0020 | 0.0021 |
| Na₂O/ZrO₂ | 0.88 | 0.88 | 0.88 | 0.87 | 0.88 | 0.88 | 0.87 | 0.88 | 0.88 | 0.87 |
| K₂O/CaO | 0.2845 | 13.5000 | 0.2241 | 0.0741 | 8.6667 | 0.0747 | 0.8285 | 1.2471 | 0.3533 | 0.4963 |
| K₂O/ZrO₂ | 0.0188 | 0.0155 | 0.0149 | 0.0148 | 0.0150 | 0.0149 | 0.1619 | 0.2478 | 0.0870 | 0.1142 |
| (Na₂O+K₂O)/(CaO+MgO) | 13.41 | 576.67 | 13.34 | 4.42 | 441.71 | 4.46 | 5.23 | 5.64 | 3.88 | 4.25 |
| (Na₂O+K₂O+CaO)/Al₂O₃ | 113 | 104 | 105 | 128 | 103 | 128 | 144 | 154 | 142 | 142 |
| Tx (°C) | 1348 | 1350 | 1323 | 1304 | 1309 | 1280 | 1272 | 1253 | 1270 | 1272 |
| Ty (°C) | 1145 | 1136 | 1159 | 1195 | 1143 | 1206 | 1216 | 1235 | 1214 | 1214 |
| ΔTxy (°C) | 203 | 214 | 164 | 109 | 166 | 74 | 56 | 18 | 56 | 58 |
| Mass loss rate (mass%) | 3.1 | 3.5 | 3.3 | 2.8 | 4.0 | 3.1 | 3.0 | 2.6 | 2.9 | 2.6 |

**[Table 2]**

| mass% | No. 11 | No. 12 | No. 13 | No. 14 | No. 15 | No. 16 | No. 17 | No. 18 | No. 19 | No. 20 |
|---|---|---|---|---|---|---|---|---|---|---|
| SiO₂ | 60.4 | 59.6 | 59.0 | 62.0 | 61.5 | 61.1 | 60.6 | 61.0 | 59.7 | 60.7 |
| Na₂O | 15.5 | 15.4 | 15.3 | 15.9 | 16.3 | 16.8 | 17.3 | 15.8 | 15.8 | 16.9 |
| TiO₂ | 0.0 | 0.0 | 0.0 | 0.0 | 0.0 | 0.0 | 0.0 | 1.2 | 2.4 | 0.0 |
| ZrO₂ | 17.5 | 17.5 | 17.5 | 17.6 | 17.6 | 17.6 | 17.5 | 17.5 | 17.7 | 17.7 |
| Y₂O₃ | 0.036 | 0.037 | 0.036 | 0.037 | 0.037 | 0.037 | 0.037 | 0.037 | 0.037 | 0.037 |
| HfO₂ | 0.34 | 0.34 | 0.34 | 0.34 | 0.34 | 0.34 | 0.34 | 0.34 | 0.34 | 0.34 |
| Al₂O₃ | 0.15 | 0.15 | 0.15 | 0.16 | 0.15 | 0.15 | 0.15 | 0.15 | 0.15 | 0.15 |
| CaO | 4.6 | 3.4 | 3.4 | 3.4 | 3.5 | 3.4 | 3.5 | 3.4 | 3.4 | 3.7 |
| K₂O | 1.160 | 2.849 | 2.852 | 0.290 | 0.280 | 0.280 | 0.280 | 0.270 | 0.270 | 0.270 |
| MgO | 0.045 | 0.550 | 1.097 | 0.033 | 0.032 | 0.031 | 0.031 | 0.030 | 0.030 | 0.030 |
| P₂O₅ | 0.03 | 0.03 | 0.03 | 0.03 | 0.03 | 0.03 | 0.03 | 0.03 | 0.03 | 0.03 |
| Li₂O | 0.09 | 0.00 | 0.09 | 0.09 | 0.09 | 0.09 | 0.09 | 0.09 | 0.09 | 0.09 |
| Fe₂O₃ | 0.031 | 0.031 | 0.031 | 0.031 | 0.031 | 0.031 | 0.031 | 0.031 | 0.031 | 0.031 |
| SO₃ | 0.078 | 0.079 | 0.081 | 0.079 | 0.078 | 0.080 | 0.080 | 0.092 | 0.092 | 0.091 |
| MoO₃ (ppm) | 7.2 | 7.9 | 7.4 | 8.3 | 8.3 | 8.1 | 8.2 | 8.0 | 7.8 | 7.9 |
| Y₂O₃/ZrO₂ | 0.0021 | 0.0021 | 0.0020 | 0.0021 | 0.0021 | 0.0021 | 0.0021 | 0.0021 | 0.0021 | 0.0021 |
| Na₂O/ZrO₂ | 0.89 | 0.88 | 0.87 | 0.90 | 0.93 | 0.95 | 0.99 | 0.90 | 0.89 | 0.96 |
| K₂O/CaO | 0.2516 | 0.8285 | 0.8314 | 0.0841 | 0.0812 | 0.0812 | 0.0812 | 0.0796 | 0.0799 | 0.0738 |
| K₂O/ZrO₂ | 0.0663 | 0.1629 | 0.1626 | 0.0165 | 0.0159 | 0.0159 | 0.0160 | 0.0154 | 0.0153 | 0.0153 |
| (Na₂O+K₂O)/(CaO+MgO) | 3.58 | 4.57 | 4.00 | 4.65 | 4.76 | 4.91 | 5.05 | 4.70 | 4.71 | 4.65 |
| (Na₂O+K₂O+CaO)/Al₂O₃ | 142 | 145 | 144 | 123 | 134 | 137 | 140 | 130 | 130 | 139 |
| Tx (°C) | 1269 | 1269 | 1290 | 1288 | 1280 | 1269 | 1281 | 1265 | 1271 | 1271 |
| Ty (°C) | 1217 | 1230 | 1176 | 1193 | 1205 | 1219 | 1184 | 1179 | 1217 | 1220 |
| ΔTxy (°C) | 52 | 39 | 114 | 95 | 75 | 50 | 97 | 86 | 54 | 51 |
| Mass loss rate (mass%) | 2.4 | 2.5 | 2.5 | 2.5 | 2.5 | 2.6 | 2.7 | 2.7 | 2.5 | 2.7 |

**[Table 3]**

| mass% | No. 21 | No. 22 | No. 23 | No. 24 | No. 25 | No. 26 | No. 27 | No. 28 | No. 29 | No. 30 |
|---|---|---|---|---|---|---|---|---|---|---|
| SiO₂ | 60.6 | 60.5 | 60.6 | 60.7 | 60.7 | 60.4 | 61.5 | 60.7 | 60.4 | 60.4 |
| Na₂O | 16.9 | 16.3 | 16.4 | 17.5 | 16.8 | 15.7 | 15.3 | 15.8 | 15.8 | 16.3 |
| TiO₂ | 0.0 | 0.0 | 0.0 | 0.0 | 0.0 | 1.8 | 0.0 | 0.0 | 0.0 | 0.0 |
| ZrO₂ | 17.6 | 17.7 | 17.7 | 17.7 | 17.6 | 17.6 | 17.7 | 17.8 | 17.6 | 17.6 |
| Y₂O₃ | 0.037 | 0.037 | 0.037 | 0.037 | 0.037 | 0.037 | 0.037 | 0.037 | 0.037 | 0.037 |
| HfO₂ | 0.34 | 0.34 | 0.34 | 0.34 | 0.34 | 0.34 | 0.34 | 0.34 | 0.34 | 0.34 |
| Al₂O₃ | 0.15 | 0.16 | 0.15 | 0.17 | 0.17 | 0.17 | 0.17 | 0.17 | 0.17 | 0.16 |
| CaO | 3.5 | 3.6 | 4.0 | 3.3 | 4.0 | 3.4 | 4.4 | 4.6 | 3.6 | 3.3 |
| K₂O | 0.540 | 1.080 | 0.539 | 0.000 | 0.000 | 0.270 | 0.270 | 0.270 | 1.759 | 1.619 |
| MgO | 0.030 | 0.032 | 0.034 | 0.030 | 0.035 | 0.032 | 0.039 | 0.041 | 0.033 | 0.032 |
| P₂O₅ | 0.03 | 0.03 | 0.03 | 0.03 | 0.03 | 0.03 | 0.03 | 0.03 | 0.03 | 0.03 |
| Li₂O | 0.09 | 0.09 | 0.09 | 0.09 | 0.09 | 0.09 | 0.09 | 0.09 | 0.09 | 0.09 |
| Fe₂O₃ | 0.032 | 0.032 | 0.033 | 0.033 | 0.032 | 0.033 | 0.033 | 0.032 | 0.032 | 0.032 |
| SO₃ | 0.092 | 0.091 | 0.091 | 0.092 | 0.092 | 0.090 | 0.091 | 0.091 | 0.090 | 0.092 |
| MoO₃ (ppm) | 7.5 | 7.8 | 7.8 | 7.9 | 7.6 | 7.5 | 7.6 | 8.2 | 8.0 | 7.4 |
| Y₂O₃/ZrO₂ | 0.0021 | 0.0021 | 0.0021 | 0.0021 | 0.0021 | 0.0021 | 0.0021 | 0.0021 | 0.0021 | 0.0021 |
| Na₂O/ZrO₂ | 0.96 | 0.92 | 0.93 | 0.99 | 0.96 | 0.89 | 0.86 | 0.89 | 0.90 | 0.93 |
| K₂O/CaO | 0.1547 | 0.2959 | 0.1353 | 0.0000 | 0.0000 | 0.0796 | 0.0612 | 0.0590 | 0.4835 | 0.4880 |
| K₂O/ZrO₂ | 0.0307 | 0.0611 | 0.0305 | 0.0000 | 0.0000 | 0.0153 | 0.0153 | 0.0152 | 0.1000 | 0.0920 |
| (Na₂O+K₂O)/(CaO+MgO) | 4.95 | 4.72 | 4.21 | 5.19 | 4.17 | 4.67 | 3.50 | 3.48 | 4.78 | 5.35 |
| (Na₂O+K₂O+CaO)/Al₂O₃ | 140 | 131 | 140 | 123 | 122 | 114 | 118 | 121 | 125 | 133 |
| Tx (°C) | 1271 | 1271 | 1269 | 1271 | 1273 | 1287 | 1273 | 1273 | 1271 | 1271 |
| Ty (°C) | 1203 | 1213 | 1216 | 1205 | 1185 | 1192 | 1223 | 1203 | 1214 | 1201 |
| ΔTxy (°C) | 68 | 58 | 53 | 66 | 88 | 95 | 50 | 70 | 57 | 70 |
| Mass loss rate (mass%) | 2.6 | 2.5 | 2.7 | 2.5 | 2.6 | 2.3 | 2.3 | 2.3 | 2.5 | 2.5 |

**[Table 4]**

| mass% | No. 31 | No. 32 | No. 33 | No. 34 | No. 35 | No. 36 | No. 37 | No. 38 | No. 39 | No. 40 |
|---|---|---|---|---|---|---|---|---|---|---|
| SiO₂ | 60.3 | 61.6 | 61.8 | 61.3 | 61.5 | 61.8 | 61.1 | 59.7 | 58.8 | 61.3 |
| Na₂O | 16.0 | 15.1 | 15.4 | 15.8 | 15.9 | 15.9 | 15.7 | 15.4 | 14.7 | 15.5 |
| TiO₂ | 0.0 | 0.0 | 0.0 | 1.2 | 1.2 | 1.2 | 1.2 | 4.4 | 5.8 | 1.2 |
| ZrO₂ | 17.6 | 17.7 | 17.7 | 17.3 | 16.9 | 16.5 | 17.4 | 17.6 | 16.5 | 17.5 |
| Y₂O₃ | 0.036 | 0.037 | 0.037 | 0.036 | 0.036 | 0.035 | 0.033 | 0 | 0 | 0.036 |
| HfO₂ | 0.34 | 0.34 | 0.34 | 0.28 | 0.31 | 0.38 | 0.44 | 0.25 | 0.00 | 0.33 |
| Al₂O₃ | 0.18 | 0.17 | 0.18 | 0.17 | 0.16 | 0.16 | 0.16 | 0.17 | 0.20 | 0.12 |
| CaO | 3.5 | 3.3 | 3.4 | 3.4 | 3.4 | 3.4 | 3.4 | 1.9 | 3.8 | 3.4 |
| K₂O | 1.750 | 1.548 | 0.899 | 0.260 | 0.260 | 0.260 | 0.256 | 0.270 | 0.000 | 0.300 |
| MgO | 0.032 | 0.031 | 0.033 | 0.029 | 0.030 | 0.030 | 0.029 | 0.019 | 0 | 0.024 |
| P₂O₅ | 0.03 | 0.03 | 0.03 | 0.03 | 0.03 | 0.03 | 0.03 | 0.03 | 0 | 0.027 |
| Li₂O | 0.09 | 0.09 | 0.10 | 0.10 | 0.10 | 0.10 | 0.10 | 0.09 | 0.09 | 0.00 |
| Fe₂O₃ | 0.032 | 0.033 | 0.032 | 0.031 | 0.031 | 0.030 | 0.031 | 0.030 | 0.040 | 0.033 |
| SO₃ | 0.091 | 0.092 | 0.091 | 0.090 | 0.087 | 0.086 | 0.088 | 0.085 | 0.070 | 0.004 |
| MoO₃ (ppm) | 7.8 | 7.4 | 7.9 | 7.7 | 7.9 | 8.1 | 7.9 | 7.8 | 0.0 | 7.5 |
| Y₂O₃/ZrO₂ | 0.0020 | 0.0021 | 0.0021 | 0.0021 | 0.0021 | 0.0021 | 0.0019 | 0.0021 | 0.0000 | 0.0021 |
| Na₂O/ZrO₂ | 0.91 | 0.85 | 0.87 | 0.91 | 0.94 | 0.96 | 0.90 | 0.87 | 0.89 | 0.884 |
| K₂O/CaO | 0.5029 | 0.4755 | 0.2639 | 0.0772 | 0.0769 | 0.0765 | 0.0760 | 0.1399 | 0.0000 | 0.0888 |
| K₂O/ZrO₂ | 0.0994 | 0.0876 | 0.0508 | 0.0150 | 0.0154 | 0.0158 | 0.0147 | 0.0153 | 0.0000 | 0.0171 |
| (Na₂O+K₂O)/(CaO+MgO) | 5.05 | 5.06 | 4.73 | 4.72 | 4.74 | 4.71 | 4.71 | 8.04 | 3.87 | 4.64 |
| (Na₂O+K₂O+CaO)/Al₂O₃ | 118 | 117 | 110 | 114 | 122 | 122 | 123 | 104 | 93 | 160 |
| Tx (°C) | 1296 | 1296 | 1277 | 1276 | 1276 | 1274 | 1273 | 1307 | 1250 | 1288 |
| Ty (°C) | 1165 | 1171 | 1183 | 1175 | 1162 | 1147 | 1146 | 1143 | 1126 | 1188 |
| ΔTxy (°C) | 131 | 125 | 94 | 101 | 114 | 127 | 127 | 164 | 124 | 100 |
| Mass loss rate (mass%) | 2.5 | 2.5 | 2.8 | 2.9 | 2.9 | 3.2 | 3.4 | 4.2 | 4.5 | 2.6 |

**[Table 5]**

| mass% | No. 41 | No. 42 | No. 43 | No. 44 | No. 45 | No. 46 | No. 47 | No. 48 | No. 49 | No. 50 |
|---|---|---|---|---|---|---|---|---|---|---|
| SiO₂ | 60.2 | 60.3 | 60.6 | 60.9 | 60.1 | 60.3 | 59.9 | 62.17 | 62.2 | 62.3 |
| Na₂O | 15.1 | 15.2 | 15.2 | 15.3 | 15.1 | 15.1 | 14.9 | 14.1 | 14.5 | 13.6 |
| TiO₂ | 4.4 | 3.5 | 1.8 | 0.0 | 3.5 | 1.1 | 0.0 | 0.4 | 0.0 | 0.1 |
| ZrO₂ | 17.6 | 17.6 | 17.7 | 17.8 | 17.5 | 17.6 | 17.4 | 16.9 | 16.9 | 17.4 |
| Y₂O₃ | 0.036 | 0.036 | 0.036 | 0.036 | 0.036 | 0.036 | 0.036 | 0.035 | 0.036 | 0.098 |
| HfO₂ | 0.33 | 0.33 | 0.33 | 0.33 | 0.33 | 0.33 | 0.33 | 0.29 | 0.33 | 0.38 |
| Al₂O₃ | 0.12 | 0.12 | 0.12 | 0.12 | 0.12 | 0.12 | 0.13 | 0.12 | 0.13 | 0.03 |
| CaO | 1.9 | 2.5 | 3.8 | 5.0 | 1.9 | 1.9 | 1.9 | 5.7 | 5.7 | 6.1 |
| K₂O | 0.300 | 0.280 | 0.280 | 0.270 | 1.260 | 3.296 | 5.279 | 0.042 | 0.069 | 0.003 |
| MgO | 0.016 | 0.020 | 0.026 | 0.035 | 0.016 | 0.019 | 0.020 | 0.04 | 0.038 | 0.045 |
| P₂O₅ | 0.03098 | 0.02898 | 0.02802 | 0.02601 | 0.029 | 0.02597 | 0.02399 | 0.035 | 0.028 | 0.011 |
| Li₂O | 0.00 | 0.00 | 0.00 | 0.00 | 0.00 | 0.00 | 0.00 | 0.00 | 0.00 | 0.00 |
| Fe₂O₃ | 0.032 | 0.032 | 0.032 | 0.033 | 0.032 | 0.031 | 0.031 | 0.051 | 0.033 | 0.004 |
| SO₃ | 0.007 | 0.082 | 0.084 | 0.081 | 0.084 | 0.087 | 0.084 | 0.087 | 0.080 | 0.103 |
| MoO₃ (ppm) | 7.8 | 8.4 | 7.2 | 7.6 | 7.8 | 7.7 | 7.6 | 7.9 | 7.9 | 8.1 |
| Y₂O₃/ZrO₂ | 0.0020 | 0.0020 | 0.0020 | 0.0020 | 0.0021 | 0.0020 | 0.0021 | 0.0021 | 0.0021 | 0.0056 |
| Na₂O/ZrO₂ | 0.858 | 0.864 | 0.859 | 0.860 | 0.863 | 0.858 | 0.856 | 0.837 | 0.858 | 0.779 |
| K₂O/CaO | 0.1587 | 0.1120 | 0.0747 | 0.0538 | 0.6632 | 1.7277 | 2.7937 | 0.0074 | 0.0122 | 0.0005 |
| K₂O/ZrO₂ | 0.0170 | 0.0159 | 0.0158 | 0.0152 | 0.0720 | 0.1875 | 0.3034 | 0.0025 | 0.0041 | 0.0002 |
| (Na₂O+K₂O)/(CaO+MgO) | 8.08 | 6.14 | 4.10 | 3.08 | 8.54 | 9.54 | 10.57 | 2.48 | 2.56 | 2.19 |
| (Na₂O+K₂O+CaO)/Al₂O₃ | 144 | 150 | 160 | 172 | 152 | 169 | 170 | 166 | 156 | 757 |
| Tx (°C) | 1284 | 1285 | 1283 | 1283 | 1288 | 1290 | 1283 | 1291 | 1288 | 1305 |
| Ty (°C) | 1132 | 1166 | 1190 | 1212 | 1142 | 1196 | 1214 | 1149 | 1171 | 1159 |
| ΔTxy (°C) | 152 | 119 | 93 | 71 | 146 | 94 | 69 | 142 | 117 | 146 |
| Mass loss rate (mass%) | 3.4 | 3.3 | 2.7 | 2.3 | 3.3 | 2.9 | 2.8 | 2.7 | 2.5 | 2.3 |

**[Table 6]**

| mass% | No. 51 | No. 52 | No. 53 | No. 54 | No. 55 | No. 56 | No. 57 | No. 58 | No. 59 | No. 60 |
|---|---|---|---|---|---|---|---|---|---|---|
| SiO₂ | 62.3 | 59.3 | 62.3 | 62.3 | 61.1 | 61.4 | 61.7 | 61.8 | 61.8 | 61.4 |
| Na₂O | 13.5 | 14.7 | 13.9 | 12.5 | 13.8 | 13.9 | 14.0 | 13.8 | 14.0 | 14.1 |
| TiO₂ | 0.1 | 2.3 | 0.1 | 0.1 | 1.5 | 1.0 | 0.8 | 0.9 | 0.7 | 0.7 |
| ZrO₂ | 17.3 | 17.0 | 17.1 | 17.3 | 16.9 | 17.0 | 17.0 | 17.0 | 17.0 | 17.1 |
| Y₂O₃ | 0.037 | 0.037 | 0.036 | 0.037 | 0.036 | 0.036 | 0.036 | 0.036 | 0.036 | 0.036 |
| HfO₂ | 0.33 | 0.33 | 0.33 | 0.33 | 0.33 | 0.33 | 0.33 | 0.33 | 0.33 | 0.33 |
| Al₂O₃ | 0.13 | 0.12 | 0.13 | 0.13 | 0.12 | 0.13 | 0.13 | 0.14 | 0.13 | 0.13 |
| CaO | 6.1 | 3.4 | 5.8 | 7.1 | 5.7 | 5.6 | 5.8 | 5.7 | 5.7 | 5.9 |
| K₂O | 0.004 | 2.570 | 0.012 | 0.006 | 0.250 | 0.390 | 0.039 | 0.040 | 0.038 | 0.040 |
| MgO | 0.034 | 0.021 | 0.034 | 0.039 | 0.045 | 0.043 | 0.046 | 0.044 | 0.044 | 0.045 |
| P₂O₅ | 0.029 | 0.032 | 0.03001 | 0.031 | 0.04108 | 0.03902 | 0.03897 | 0.039 | 0.039 | 0.039 |
| Li₂O | 0.00 | 0.00 | 0.00 | 0.00 | 0.00 | 0.00 | 0.00 | 0.00 | 0.00 | 0.00 |
| Fe₂O₃ | 0.033 | 0.032 | 0.033 | 0.034 | 0.033 | 0.035 | 0.033 | 0.033 | 0.033 | 0.033 |
| SO₃ | 0.076 | 0.079 | 0.076 | 0.074 | 0.077 | 0.077 | 0.078 | 0.073 | 0.077 | 0.075 |
| MoO₃ (ppm) | 7.9 | 7.9 | 7.9 | 7.8 | 7.8 | 7.9 | 7.7 | 8.0 | 7.6 | 8.0 |
| Y₂O₃/ZrO₂ | 0.0021 | 0.0022 | 0.0021 | 0.0021 | 0.0021 | 0.0021 | 0.0021 | 0.0021 | 0.0021 | 0.0021 |
| Na₂O/ZrO₂ | 0.780 | 0.865 | 0.813 | 0.723 | 0.817 | 0.818 | 0.824 | 0.812 | 0.824 | 0.825 |
| K₂O/CaO | 0.0007 | 0.7471 | 0.0021 | 0.0008 | 0.0437 | 0.0699 | 0.0067 | 0.0070 | 0.0067 | 0.0068 |
| K₂O/ZrO₂ | 0.0002 | 0.1512 | 0.0007 | 0.0003 | 0.0148 | 0.0229 | 0.0023 | 0.0024 | 0.0022 | 0.0023 |
| (Na₂O+K₂O)/(CaO+MgO) | 2.20 | 4.99 | 2.37 | 1.75 | 2.44 | 2.54 | 2.39 | 2.40 | 2.45 | 2.39 |
| (Na₂O+K₂O+CaO)/Al₂O₃ | 151 | 173 | 152 | 151 | 165 | 153 | 153 | 140 | 152 | 154 |
| Tx (°C) | 1305 | 1266 | 1300 | 1304 | 1278 | 1288 | 1288 | 1290 | 1291 | 1285 |
| Ty (°C) | 1164 | 1194 | 1162 | 1188 | 1171 | 1159 | 1156 | 1149 | 1167 | 1173 |
| ΔTxy (°C) | 141 | 72 | 138 | 116 | 107 | 129 | 132 | 141 | 124 | 112 |
| Mass loss rate (mass%) | 2.1 | 3.0 | 2.4 | 2.1 | 2.8 | 2.6 | 2.5 | 2.7 | 2.6 | 2.7 |

**[Table 7]**

| mass% | No. 61 | No. 62 | No. 63 | No. 64 | No. 65 | No. 66 | No. 67 | No. 68 |
|---|---|---|---|---|---|---|---|---|
| SiO₂ | 61.6 | 61.8 | 62.2 | 61.6 | 61.8 | 62.0 | 61.8 | 61.8 |
| Na₂O | 14.2 | 14.2 | 14.1 | 14.1 | 14.1 | 14.1 | 13.8 | 13.7 |
| TiO₂ | 0.9 | 0.7 | 0.4 | 0.4 | 0.4 | 0.5 | 0.9 | 0.9 |
| ZrO₂ | 17.0 | 17.0 | 16.6 | 17.0 | 17.0 | 17.1 | 17.0 | 17.0 |
| Y₂O₃ | 0.036 | 0.036 | 0.033 | 0.034 | 0.034 | 0.034 | 0.034 | 0.034 |
| HfO₂ | 0.33 | 0.33 | 0.33 | 0.33 | 0.33 | 0.31 | 0.33 | 0.33 |
| Al₂O₃ | 0.12 | 0.13 | 0.13 | 0.15 | 0.13 | 0.13 | 0.13 | 0.13 |
| CaO | 5.6 | 5.6 | 5.9 | 6.1 | 5.9 | 5.6 | 5.8 | 5.9 |
| K₂O | 0.039 | 0.039 | 0.038 | 0.040 | 0.039 | 0.038 | 0.004 | 0.004 |
| MgO | 0.043 | 0.043 | 0.044 | 0.031 | 0.030 | 0.029 | 0.030 | 0.030 |
| P₂O₅ | 0.03899 | 0.03798 | 0.03503 | 0.02802 | 0.02802 | 0.02801 | 0.02801 | 0.0280 |
| Li₂O | 0.00 | 0.00 | 0.00 | 0.00 | 0.00 | 0.00 | 0.00 | 0.00 |
| Fe₂O₃ | 0.033 | 0.033 | 0.030 | 0.032 | 0.031 | 0.031 | 0.031 | 0.031 |
| SO₃ | 0.078 | 0.077 | 0.076 | 0.078 | 0.078 | 0.079 | 0.078 | 0.078 |
| MoO₃ (ppm) | 7.9 | 7.8 | 7.6 | 7.8 | 8.2 | 7.6 | 7.9 | 7.9 |
| Y₂O₃/ZrO₂ | 0.0021 | 0.0021 | 0.0020 | 0.0020 | 0.0020 | 0.0020 | 0.0020 | 0.0020 |
| Na₂O/ZrO₂ | 0.835 | 0.835 | 0.849 | 0.829 | 0.829 | 0.825 | 0.812 | 0.806 |
| K₂O/CaO | 0.0070 | 0.0070 | 0.0065 | 0.0066 | 0.0066 | 0.0067 | 0.0007 | 0.0007 |
| K₂O/ZrO₂ | 0.0023 | 0.0023 | 0.0023 | 0.0024 | 0.0023 | 0.0022 | 0.0002 | 0.0002 |
| (Na₂O+K₂O)/(CaO+MgO) | 2.53 | 2.53 | 2.39 | 2.31 | 2.39 | 2.50 | 2.38 | 2.33 |
| (Na₂O+K₂O+CaO)/Al₂O₃ | 165 | 153 | 154 | 135 | 154 | 152 | 150 | 150 |
| Tx (°C) | 1287 | 1289 | 1290 | 1286 | 1289 | 1294 | 1290 | 1291 |
| Ty (°C) | 1169 | 1165 | 1160 | 1170 | 1161 | 1166 | 1148 | 1155 |
| ΔTxy (°C) | 118 | 124 | 130 | 116 | 128 | 128 | 142 | 136 |
| Mass loss rate (mass%) | 2.5 | 2.5 | 2.6 | 2.3 | 2.5 | 2.4 | 2.5 | 2.4 |

Each sample in the tables was prepared as follows.

First, various glass raw materials such as natural raw materials and chemical raw materials were weighed and mixed so as to have the glass composition shown in the tables, and a raw material batch was prepared. Next, this raw material batch was charged into a platinum-rhodium alloy crucible, and then heated in an indirect heating electric furnace at 1550°C for 5 hours to obtain a molten glass. Note that, in order to obtain a homogeneous molten glass, the molten glass was stirred a plurality of times using a heat-resistant stirring bar. Subsequently, the obtained molten glass was poured into a refractory mold to form a sheet-shaped glass, which was then subjected to an annealing treatment (heating for 30 minutes at a temperature 30°C to 50°C higher than the temperature at 10¹³ dPa s, and then lowering the temperature at a rate of 3°C/min from the annealing point to the strain point) in an annealing furnace. For each sample obtained, the spinning temperature Tx, the liquidus temperature Ty, and the alkali resistance were measured.

The spinning temperature Tx at which the viscosity of the molten glass corresponded to 10³ dPa·s was calculated by interpolation of a viscosity curve obtained based on a plurality of measurements of each viscosity measured based on a platinum sphere pull up method after the formed glass is charged into an alumina crucible, reheated, and heated to a molten state.

For the liquidus temperature Ty, a platinum container was filled with a glass powder that passed through a standard sieve 30-mesh sieve (300 µm) and remained on a 50-mesh sieve (300 µm) to have an appropriate bulk density, and the sample was charged into an indirect heating type temperature gradient furnace with a maximum temperature of 1320°C, left standing, and heat-treated in an air atmosphere for 16 hours. Thereafter, the platinum container containing the glass sample was taken out, and the glass sample was removed from the platinum container. The glass sample was allowed to cool to room temperature, then the location where crystals started to precipitate was confirmed using a polarizing microscope, and the crystal precipitation temperature was calculated based on a temperature gradient in the indirect heating furnace.

The temperature difference ΔTxy between the spinning temperature Tx and the liquidus temperature Ty was calculated by (spinning temperature Tx) - (liquidus temperature Ty).

The alkali resistance was measured as follows. First, the above sheet-shaped glass sample was crushed, and a glass having a particle size of from 300 µm to 500 µm in diameter was precisely weighed by the specific gravity, and then immersed in 100 ml of a 10 mass% NaOH solution and shaken at 80°C for 168 hours. Thereafter, the mass loss rate of the glass sample was measured. The smaller this value is, the better the alkali resistance is.

As is clear from Tables 1 to 7, in Sample Nos. 1 to 38 and Nos. 40 to 68, which are Examples, the spinning temperature Tx of the glass is 1350°C or lower, the liquidus temperature Ty is 1235°C or lower, and the temperature difference ΔTxy between the spinning temperature Tx of the glass and the liquidus temperature Ty is 18°C or more, and the productivity is excellent. Further, the mass loss rate, which is an indicator of the alkali resistance, is less than 4.5% in all cases.

In contrast, in sample No. 39, which is Comparative Example, the mass loss rate, which is an indicator of the alkali resistance, is 4.5%, and the alkali resistance is low.

### EXAMPLE 2

Next, raw material batches mixed to have the glass compositions of Sample Nos. 1 to 38 and Nos. 40 to 68 described in Tables 1 to 7 were each charged into a glass melting furnace, and melted and homogenized at 1400°C to 1600°C. Subsequently, the obtained molten glass was supplied to a bushing and continuously drawn in filaments out of bushing nozzles provided at the bottom surface. A treatment agent was applied to the monofilaments thus obtained, and 2,000 to 4,000 of the monofilaments were bundled into a glass strand.

### INDUSTRIAL APPLICABILITY

The glass fiber according to the present invention is suitable not only as a reinforcing material for GRC but also as a reinforcing material for a calcium silicate board, a corrosion-resistant material such as a battery separator.

## Claims

1. A glass fiber comprising, as a glass composition, in mass% in terms of oxide, from 50% to 70% of SiO₂, from 10% to 20% of Na₂O, from 0% to 5.5% of TiO₂, and from 10% to 30% of ZrO₂.

2. The glass fiber according to claim 1, further comprising, as a glass composition, in mass% in terms of oxide, from 0.001% to 0.1% of Y₂O₃.

3. The glass fiber according to claim 1 or 2, further comprising, as a glass composition, in mass% in terms of oxide, from 0.001% to 1% of HfO₂.

4. The glass fiber according to claim 1 or 2, comprising, as a glass composition, in mass% in terms of oxide, from 57.1% to 64.8% of SiO₂, from 0% to 0.3% of Al₂O₃, from 1.71% to 10% of CaO, from 12% to 20% of Na₂O, from 0% to 6% of K₂O, from 0% to 5% of TiO₂, and from 15.1% to 18.5% of ZrO₂.

5. The glass fiber according to claim 1 or 2, wherein as a glass composition, Y₂O₃/ZrO₂ is 0.0005 or more in mass ratio in terms of oxide.

6. The glass fiber according to claim 1 or 2, wherein as a glass composition, Na₂O/ZrO₂ is from 0.4 to 1.3 in mass ratio in terms of oxide.

7. The glass fiber according to claim 1 or 2, wherein as a glass composition, K₂O/CaO is 15 or less in mass ratio in terms of oxide.

8. The glass fiber according to claim 1 or 2, wherein as a glass composition, K₂O/ZrO₂ is 0.5 or less in mass ratio in terms of oxide.

9. The glass fiber according to claim 1 or 2, wherein as a glass composition, (Na₂O+K₂O)/(CaO+MgO) is 1.5 or more in mass ratio in terms of oxide.

10. The glass fiber according to claim 1 or 2, wherein as a glass composition, (Na₂O+K₂O+CaO)/Al₂O₃ is 80 or more in mass ratio in terms of oxide.

11. The glass fiber according to claim 1 or 2, wherein a spinning temperature Tx is 1350°C or lower.

12. The glass fiber according to claim 1 or 2, wherein a temperature difference ΔTxy between a spinning temperature Tx and a liquidus temperature Ty is 15°C or more.

13. The glass fiber according to claim 1 or 2, wherein a liquidus temperature Ty is 1250°C or lower.

14. The glass fiber according to claim 1 or 2, wherein when a glass corresponding to a specific gravity crushed and classified to a particle size of from 300 µm to 500 µm is immersed in 100 ml of a 10 mass% NaOH aqueous solution at 80°C for 168 hours, a mass loss rate of the glass is less than 4.5%.

15. A glass fiber manufacturing method comprising:
melting a mixed raw material batch in a glass melting furnace, continuously drawing the obtained molten glass out of a bushing, and forming the drawn-out glass into a fiber shape, to obtain the glass fiber according to claim 1 or 2.

16. A glass comprising, as a glass composition, in mass% in terms of oxide, from 50% to 70% of SiO₂, from 10% to 20% of Na₂O, from 0% to 5.5% of TiO₂, and from 10% to 30% of ZrO₂.
